# EUROPEAN PATENT APPLICATION

(11) **EP 4 756 528 A1**
(43) Date of publication of application: **10.06.2026**
(21) Application number: 23949618.5
(22) Date of filing: 20.12.2023
(51) Int. Cl.: G03B 15/02, H04N 23/72

(54) **FILL LIGHT CONTROL METHOD AND APPARATUS, CAMERA, AND STORAGE MEDIUM**

(30) Priority: 24.08.2023 CN 202311074559
(71) Applicant: Zhejiang Uniview Technologies Co., Ltd., Hangzhou, Zhejiang 310051 (CN)
(72) Inventor: SONG, Meili, Hangzhou, Zhejiang 310051 (CN)
(74) Representative: HGF
(86) International application number: PCT/CN2023/140175
(87) International publication number: WO 2025/039440

(57) **Abstract**

Provided are a fill light control method and apparatus, a camera (10), and a storage medium. The fill light control method is applied to the camera (10). The camera (10) includes at least two cameras and at least two fill lights, and the cameras and the fill lights are in a one-to-one correspondence. In a case where a first camera and a corresponding first fill light synchronously rotate to a preset first position-limiting region, position information of the second fill light is monitored in real time during a process in which a second camera and a corresponding second fill light rotate synchronously, where the first camera is a camera that rotates first among the at least two cameras, and the second camera is any camera among the at least two cameras other than the first camera. A second position-limiting region of the second fill light is acquired. In a case where it is determined, according to the position information of the second fill light, that the second fill light rotates to a boundary position of the second position-limiting region, the second fill light is controlled to remain stationary at the boundary position of the second position-limiting region, and the second camera is controlled to continue rotating toward the second position-limiting region or remain stationary.

## Description

The present application claims priority to Chinese Patent Application No. 202311074559.4 filed with the China National Intellectual Property Administration (CNIPA) on Aug. 24, 2023, the disclosure of which is incorporated herein by reference in its entirety.

### TECHNICAL FIELD

The present application relates to the technical field of camera devices, and for example, relates to a fill light control method, a fill light control apparatus, a camera device, and a storage medium.

### BACKGROUND

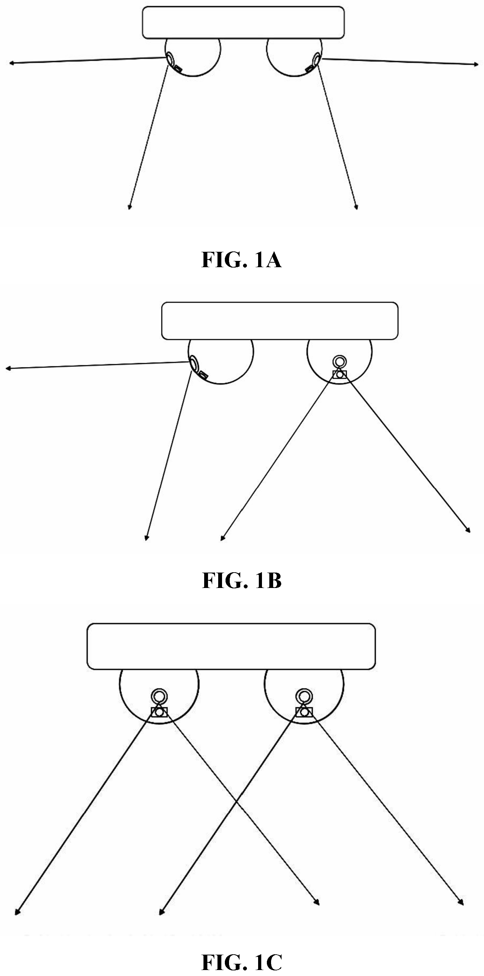

In recent years, binocular camera devices and multi-lens camera devices have been more and more widely used due to their diverse application scenarios, strong adaptability, and lower cost compared to two or more monocular camera devices. A binocular camera device is used as an example. The binocular camera device is provided with two hemispherical covers, each of which contains a camera head and a fill light inside. Such a camera device can be applied to front-back monitoring in corridor environments, right-angle monitoring at corners and crossroads, and horizontal extension of monitoring regions. FIG. 1A is a diagram of a scenario in which a binocular camera device performs front-back monitoring provided by the related art. FIG. 1B is a diagram of a scenario in which a binocular camera device performs right-angle monitoring provided by the related art. FIG. 1C is a diagram of a scenario in which a binocular camera device performs horizontal monitoring provided by the related art.

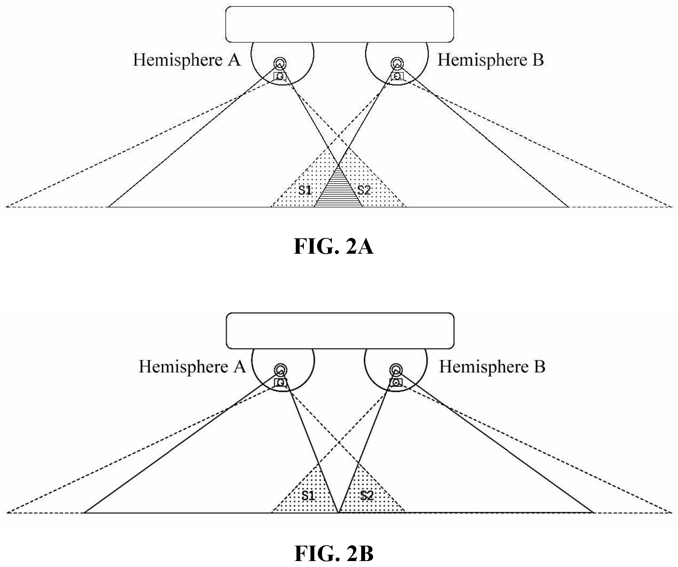

However, when the binocular camera device is deployed for a horizontally extended monitoring region, an overlap of illumination regions may occur because the fields of view overlap and the illumination angle of the fill light is larger than the field of view of the camera head, resulting in local overexposure. FIG. 2A is a diagram showing an overlap of illumination regions in a binocular camera device provided by the related art. As shown in FIG. 2A, when the monitoring regions of hemisphere A and hemisphere B are adjusted to horizontal splicing, the fields of view generally have a partial overlap. Due to the overlap of the fields of view and the fact that the illumination angle of the fill light (as shown by the dashed-line region) needs to be larger than the field of view of the camera device (as shown by the solid-line region), the region within the fields of view S1 and S2 receives simultaneous illumination from the two fill lights of hemisphere A and hemisphere B. This may cause excessive illumination and overexposure in the region. If the brightness of the fill lights is reduced to prevent overexposure in this region, other regions will suffer from insufficient illumination. FIG. 2B is a diagram showing an overlap of illumination regions in another binocular camera device provided by the related art. As shown in FIG. 2B, even when the monitoring regions of hemisphere A and hemisphere B do not overlap, overexposure still occurs because the illumination angle of the fill light is larger than the field of view.

### SUMMARY

Embodiments of the present application provide a fill light control method, a fill light control apparatus, a camera device, and a storage medium to solve the technical problem of local overexposure caused by an overlap of illumination regions in a binocular camera device or a multi-lens camera device.

According to one aspect of the present application, a fill light control method is provided. The method is applied to a camera device and includes steps below. In a case where a first camera head of the camera device and a corresponding first fill light of the camera device synchronously rotate to a preset first position-limiting region, position information of the second fill light is monitored in real time during a process in which a second camera head of the camera device and a corresponding second fill light of the camera device rotate synchronously, where the camera device includes at least two camera heads and at least two fill lights, the first camera head is a camera head that rotates first among the at least two camera heads, the second camera head is any camera head among the at least two camera heads other than the first camera head, and the at least two camera heads and the at least two fill lights are in a one-to-one correspondence. A second position-limiting region of the second fill light is acquired, where in a case where the first fill light is at any position outside the first position-limiting region, an overlapping illumination region between the first fill light and the second fill light is not overexposed, and in a case where the second fill light is at any position outside the second position-limiting region, an overlapping illumination region between the second fill light and the first fill light is not overexposed. In a case where it is determined, according to the position information of the second fill light, that the second fill light rotates to a boundary position of the second position-limiting region, the second fill light is controlled to remain stationary at the boundary position of the second position-limiting region, and the second camera head is controlled to continue rotating toward the second position-limiting region or remain stationary.

According to another aspect of the present application, a fill light control apparatus applied to a camera device is provided. The camera device includes at least two camera heads and at least two fill lights, and the at least two camera heads and the at least two fill lights are in a one-to-one correspondence. The apparatus includes a position monitoring module, a position-limiting region acquisition module, and a fill light control module. The position monitoring module is configured to, in a case where a first camera head and a corresponding first fill light synchronously rotate to a preset first position-limiting region, monitor position information of the second fill light in real time during a process in which a second camera head and a corresponding second fill light rotate synchronously, where the first camera head is a camera head that rotates first among the at least two camera heads, and the second camera head is any camera head among the at least two camera heads other than the first camera head. The position-limiting region acquisition module is configured to acquire a second position-limiting region of the second fill light, where in a case where the first fill light is at any position outside the first position-limiting region, an overlapping illumination region between the first fill light and the second fill light is not overexposed, and in a case where the second fill light is at any position outside the second position-limiting region, an overlapping illumination region between the second fill light and the first fill light is not overexposed. The fill light control module is configured to, in a case where it is determined, according to the position information of the second fill light, that the second fill light rotates to a boundary position of the second position-limiting region, control the second fill light to remain stationary at the boundary position of the second position-limiting region, and control the second camera head to continue rotating toward the second position-limiting region or remain stationary.

According to another aspect of the present application, a camera device including at least two camera heads and at least two fill lights is provided. The at least two camera heads and the at least two fill lights are in a one-to-one correspondence. The camera device also includes at least one processor and a memory communicatively connected to the at least one processor. The memory stores a computer program executable by the at least one processor. The computer program is configured to, when executed by the at least one processor, cause the at least one processor to perform the fill light control method according to any embodiment of the present application.

According to another aspect of the present application, a computer-readable storage medium is provided. The computer-readable storage medium stores computer instructions that, when executed by a processor, cause the processor to perform the fill light control method according to any embodiment of the present application.

### BRIEF DESCRIPTION OF DRAWINGS

The accompanying drawings used in the description of the embodiments will be briefly described below. Apparently, the accompanying drawings described below illustrate part of embodiments of the present application, and those of ordinary skill in the art may obtain other accompanying drawings based on the accompanying drawings described below on the premise that no creative work is done.
FIG. 1A is a diagram of a scenario in which a binocular camera device performs front-back monitoring provided by the related art.
FIG. 1B is a diagram of a scenario in which a binocular camera device performs right-angle monitoring provided by the related art.
FIG. 1C is a diagram of a scenario in which a binocular camera device performs horizontal monitoring provided by the related art.
FIG. 2A is a diagram showing an overlap of illumination regions in a binocular camera device provided by the related art.
FIG. 2B is a diagram showing an overlap of illumination regions in another binocular camera device provided by the related art.
FIG. 3 is a flowchart of a fill light control method according to embodiment one of the present application.
FIG. 4 is a diagram illustrating the structure of a binocular camera device according to an embodiment of the present application.
FIG. 5 is a top view of rotation positions of a binocular camera device according to an embodiment of the present application.
FIG. 6 is a diagram showing an overlap of illumination regions in a binocular camera device according to an embodiment of the present application.
FIG. 7A is a diagram showing an overlap of illumination regions in a binocular camera device according to an embodiment of the present application.
FIG. 7B is a diagram showing an overlap of illumination regions in another binocular camera device according to an embodiment of the present application.
FIG. 8 is a diagram illustrating the structure of a fill light control apparatus according to embodiment two of the present application.
FIG. 9 is a diagram illustrating the structure of a camera device for implementing the fill light control method according to embodiments of the present application.

### DETAILED DESCRIPTION

The technical solutions in the embodiments of the present application are described below in conjunction with the drawings in the embodiments of the present application. Apparently, the embodiments described below are part of the embodiments of the present application. Based on the embodiments of the present application, all other embodiments obtained by those of ordinary skill in the art without creative work are within the scope of the present application.

It is to be noted that terms such as "first" and "second" in the description, claims, and drawings of the present application are used to distinguish between similar objects and are not necessarily used to describe a particular order or sequence. It is to be understood that the data used in this manner is interchangeable where appropriate so that the embodiments of the present application described herein may also be implemented in a sequence other than those illustrated or described herein. Additionally, terms "comprising", "including", and any other variations thereof are intended to encompass a non-exclusive inclusion. For example, a process, method, system, product, or device that includes a series of steps or units not only includes the expressly listed steps or units but may also include other steps or units that are not expressly listed or are inherent to such a process, method, product, or device.

### Embodiment one

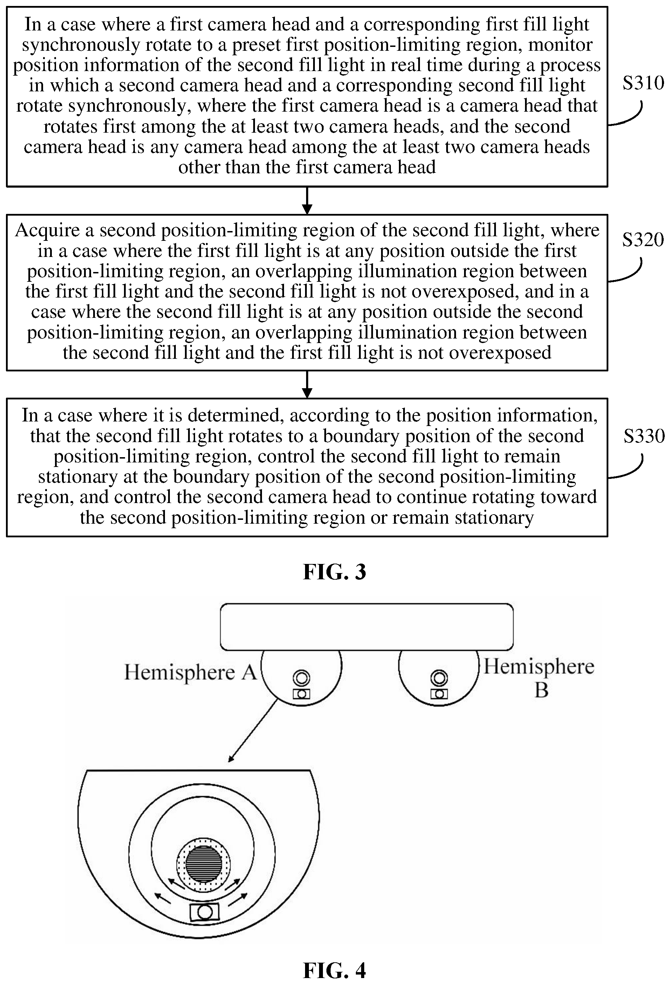

FIG. 3 is a flowchart of a fill light control method according to embodiment one of the present application. This embodiment is applicable to a situation in which fill lights of a binocular camera device or a multi-lens camera device are controlled. The method is applied to a camera device, where the camera device includes at least two camera heads and at least two fill lights, and the camera heads and the fill lights are in a one-to-one correspondence. The method may be performed by a fill light control apparatus. The apparatus may be implemented in the form of hardware and/or software and may be configured in the camera device. As shown in FIG. 3, the method includes S310 to S330.

In S310, in a case where a first camera head and a corresponding first fill light synchronously rotate to a preset first position-limiting region, position information of the second fill light is monitored in real time during a process in which a second camera head and a corresponding second fill light rotate synchronously, where the first camera head is a camera head that rotates first among the at least two camera heads, and the second camera head is any camera head among the at least two camera heads other than the first camera head.

The camera device includes at least two camera heads and at least two fill lights, and the camera heads and the fill lights are in a one-to-one correspondence. It can be understood that the camera device is a binocular camera device or a multi-lens camera device. For example, the camera device may be a binocular hemispherical camera device or a multi-lens hemispherical camera device, or a binocular spherical camera device or a multi-lens spherical camera device. It should be noted that the shape of the camera device is not limited in the embodiments of the present application. In the embodiments of the present application, a camera head and a fill light that have a correspondence may rotate synchronously or separately. In a case where a camera head and a fill light that have a correspondence rotate synchronously, the relative position between the camera head and the fill light remains fixed. The technical solutions provided in the embodiments of the present application are explained below by using a binocular camera device as an example. Exemplarily, FIG. 4 is a diagram illustrating the structure of a binocular camera device according to an embodiment of the present application.

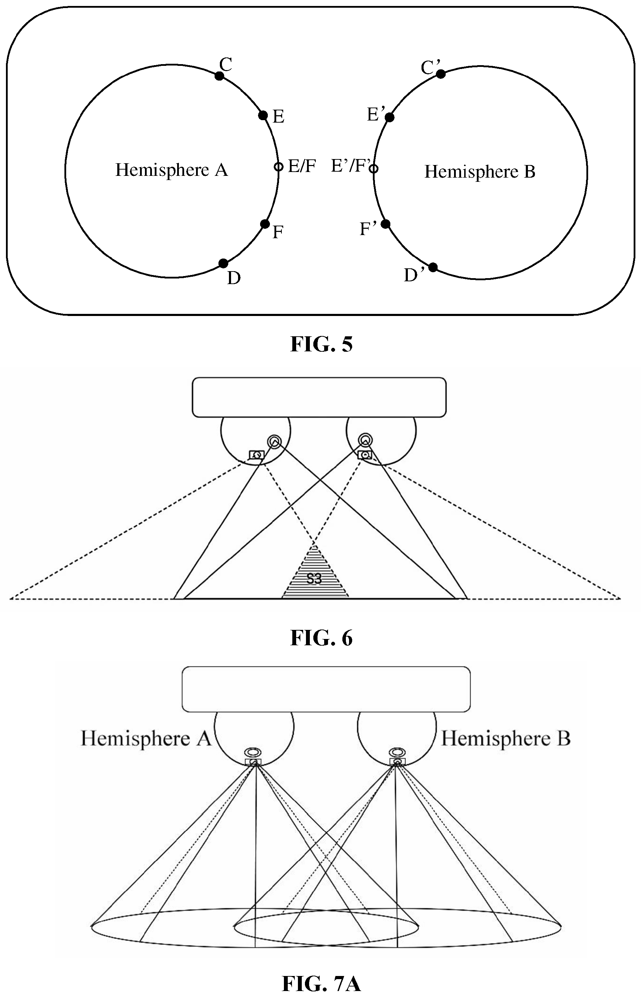

In the embodiments of the present application, in a case where fields of view of camera heads of a binocular camera device or a multi-lens camera device have an overlapping region, since the illumination angle of a fill light is greater than the field of view of a camera head, an overlap of illumination regions occurs. Therefore, the distance between the at least two camera heads of the camera device, the fields of view of the at least two camera heads, and the illumination angles of the at least two fill lights are acquired. position-limiting regions of the at least two fill lights are determined, respectively, according to the distance between the at least two camera heads, the fields of view of the at least two camera heads, and the illumination angles of the at least two fill lights. A position-limiting region may be understood as a region in which, in a case where the at least two fill lights are simultaneously located in corresponding position-limiting regions, an overlap of illumination regions occurs, causing overexposure in the overlapping region. Exemplarily, FIG. 5 is a top view of rotation positions of a binocular camera device according to an embodiment of the present application. As shown in FIG. 5, in a case where a camera head in hemisphere A is located in a position region corresponding to a minor arc CD and a camera head in hemisphere B is located in a position region corresponding to a minor arc C'D', an illumination region of a fill light in hemisphere A overlaps an illumination region of a fill light in hemisphere B, and the overlapping illumination region causes overexposure when the camera head in hemisphere A or the camera head in hemisphere B performs image monitoring.

The first position-limiting region is a position-limiting region corresponding to the first fill light in the camera device. When multiple camera heads and corresponding fill lights of the camera device rotate synchronously, a sequence of rotation exists. In the embodiments of the present application, a camera head that rotates first is used as the first camera head, a fill light corresponding to the first camera head is used as the first fill light, other camera heads in the camera device are used as second camera heads, and fill lights corresponding to the second camera heads are used as second fill lights. It should be noted that the sequence of rotation of the camera device is not fixed in different time periods. Therefore, the first camera head and the corresponding first fill light, and the second camera head and the corresponding second fill light are not fixed.

In the embodiments of the present application, during a process in which the first camera head and the corresponding first fill light rotate synchronously, the positions of the first camera head and the corresponding first fill light are monitored in real time. In a case where it is determined that the first fill light rotates to the preset first position-limiting region (since the first camera head and the first fill light rotate synchronously, the relative position between the two is very close, so it can also be understood that the first camera head and the first fill light synchronously rotate to the preset first position-limiting region), if the second camera head and the corresponding fill light are also located in the corresponding position-limiting region, an overlap of illumination regions occurs, and the overlapping illumination region is overexposed when the camera device performs image monitoring. However, in a case where the first camera head and the corresponding first fill light synchronously rotate to a non-position-limiting region (a region other than the first position-limiting region), no matter which position the second camera head and the corresponding second fill light are in, no overlap of illumination regions occurs, that is, no overexposure occurs in the monitoring image of the camera device. Therefore, in a case where it is determined that the first camera head and the corresponding first fill light synchronously rotate to the preset first position-limiting region, during a process in which the second camera head and the corresponding second fill light rotate synchronously, the position information of the second fill light is monitored in real time, so as to determine whether overexposure occurs in the monitoring image of the camera device according to the position information of the second fill light.

S320, a second position-limiting region of the second fill light is acquired, where in a case where the first fill light is at any position outside the first position-limiting region, an overlapping illumination region between the first fill light and the second fill light is not overexposed, and in a case where the second fill light is at any position outside the second position-limiting region, an overlapping illumination region between the second fill light and the first fill light is not overexposed.

In the embodiments of the present application, position-limiting regions corresponding to different fill lights in the camera device are different. Therefore, a correspondence table between fill lights and position-limiting regions of the camera device may be acquired. The correspondence table records the position-limiting region of each fill light of the camera device. The position-limiting region of the second fill light is found according to the correspondence table between fill lights and position-limiting regions, and is used as the second position-limiting region.

In a case where the first fill light is located at any position outside the first position-limiting region, an overlapping illumination region between the first fill light and the second fill light is not overexposed. In a case where the second fill light is located at any position outside the second position-limiting region, an overlapping illumination region between the second fill light and the first fill light is not overexposed. It can be understood that in a case where the first fill light is located at any position outside the first position-limiting region, regardless of the position of the second fill light, no overlapping illumination region exists between the first fill light and the second fill light, or even if an overlapping illumination region exists between the first fill light and the second fill light, the overlapping illumination region is not overexposed. Similarly, in a case where the second fill light is located at any position outside the second position-limiting region, no matter which position the first fill light is in, no overlapping illumination region exists between the second fill light and the first fill light, or even if an overlapping illumination region exists between the second fill light and the first fill light, the overlapping illumination region is not overexposed.

It can be understood that the first position-limiting region is a position region where, when the second fill light reaches at least one position of the position-limiting region of the second camera head, an overlapping illumination region between the first fill light and the second fill light is overexposed. That is, in a case where the first fill light is located within the first position-limiting region and the second fill light reaches at least one position in the position-limiting region of the second camera head, overexposure occurs in the overlapping illumination region between the first fill light and the second fill light. The second position-limiting region is a position region where, when the first fill light reaches at least one position of the position-limiting region of the first camera head, an overlapping illumination region between the second fill light and the first fill light is overexposed. That is, in a case where the second fill light is located within the second position-limiting region and the first fill light reaches at least one position in the position-limiting region of the first camera head, overexposure occurs in the overlapping illumination region between the first fill light and the second fill light. To avoid ineffective rotation of camera heads, a position-limiting region may be set for each camera head. As shown in FIG. 5, a position region corresponding to a minor arc EF may be set as the position-limiting region of the camera head in hemisphere A, and a position region corresponding to a minor arc E'F' may be set as the position-limiting region of the camera head in hemisphere B. Therefore, in a case where the position-limiting region of the fill light in hemisphere A is at least one position where the fill light in hemisphere B reaches the position-limiting region of the camera head in hemisphere B (the position region corresponding to minor arc E'F'), an overlapping illumination region between the fill light in hemisphere A and the fill light in hemisphere B is overexposed. Similarly, in a case where the position-limiting region of the fill light in hemisphere B is at least one position where the fill light in hemisphere A reaches the position-limiting region of the camera head in hemisphere A (the position region corresponding to minor arc EF), an overlapping illumination region between the fill light in hemisphere A and the fill light in hemisphere B is overexposed.

It can be understood that in a case where the boundary position of the first position-limiting region corresponds to a position at which the second fill light reaches the position-limiting region of the second camera head, the overlapping illumination region between the first fill light and the second fill light constitutes a critical position where overexposure is just avoided. In other words, if the first fill light continues to rotate toward the first position-limiting region beyond the boundary position of the first position-limiting region, and the second fill light reaches the position-limiting region of the second camera head, overexposure occurs in the overlapping illumination region between the first fill light and the second fill light. Conversely, if the first fill light rotates away from the first position-limiting region beyond the boundary position of the first position-limiting region, even when the second fill light reaches the position-limiting region of the second camera head, the overlapping illumination region between the first fill light and the second fill light is not overexposed. In a case where the boundary position of the second position-limiting region corresponds to a position at which the first fill light reaches the position-limiting region of the first camera head, the overlapping illumination region between the first fill light and the second fill light constitutes a critical position where overexposure is just avoided. In other words, if the second fill light continues to rotate toward the second position-limiting region beyond the boundary position of the second fill light, and the first fill light reaches the position-limiting region of the first camera head, overexposure occurs in the overlapping illumination region between the first fill light and the second fill light. Conversely, if the second fill light rotates away from the second position-limiting region beyond the boundary position of the second fill light, even when the first fill light reaches the position-limiting region of the first camera head, the overlapping illumination region between the first fill light and the second fill light is overexposed. For example, as shown in FIG. 5, the positions corresponding to E' and F' are the boundary positions of the position-limiting region of the fill light in hemisphere A. That is, in a case where the fill light in hemisphere B reaches the position-limiting region of the camera head in hemisphere B, when the fill light in hemisphere A is located at the position corresponding to E' or F', the area of the overlapping illumination region between the fill light in hemisphere A and the fill light in hemisphere B just equals a preset area threshold, or the illumination brightness corresponding to the overlapping illumination region just equals a preset illumination brightness threshold. This illumination brightness threshold is defined as the illumination brightness at which the overlapping illumination region is just not overexposed. Likewise, the positions corresponding to E and F are the boundary positions of the position-limiting region of the fill light in hemisphere B. That is, in a case where the fill light in hemisphere A reaches the position-limiting region of the camera head in hemisphere A, when the fill light in hemisphere B is located at the position corresponding to E or F, the area of the overlapping illumination region between the fill light in hemisphere A and the fill light in hemisphere B just equals a preset area threshold, or the illumination brightness corresponding to the overlapping illumination region just equals a preset illumination brightness threshold. This illumination brightness threshold is defined as the illumination brightness at which the overlapping illumination region is just not overexposed.

Optionally, acquiring the correspondence table between fill lights and position-limiting regions of the camera device includes acquiring configuration information of the camera device, where the configuration information includes the distance between the at least two camera heads, fields of view of the at least two camera heads, and illumination angles of the at least two fill lights; determining position-limiting regions for the at least two fill lights according to the configuration information, respectively; and generating the correspondence table between the fill lights and the position-limiting regions of the camera device according to the position-limiting regions of the at least two fill lights. In the embodiments of the present application, the relative positions of the at least two camera heads, the fields of view of the at least two camera heads, and the illumination angles of the at least two fill lights in the camera device all affect the position-limiting regions of the at least two fill lights. For example, with fixed relative positions and fields of view of the at least two camera heads, larger illumination angles of the at least two fill lights result in larger overlapping illumination regions. To avoid overexposure in the monitoring image of the camera device, the position-limiting regions of the at least two fill lights need to be larger accordingly. Therefore, the distance between the at least two camera heads, the fields of view of the at least two camera heads, and the illumination angles of the at least two fill lights are acquired, and the position-limiting region of each fill light is determined according to the configuration information, thereby generating the correspondence table between the fill lights and the position-limiting regions of the camera device. It should be noted that the configuration information for a camera device is fixed.

Optionally, the configuration information of the camera device (including the distance between the at least two camera heads, the fields of view of the at least two camera heads, and the illumination angles of the at least two fill lights) may also be acquired directly, and the second position-limiting region of the second fill light may be determined directly according to this configuration information.

Optionally, acquiring the second position-limiting region of the second fill light includes determining a current position of the first fill light within the first position-limiting region, and determining the second position-limiting region of the second fill light according to the current position. With this arrangement, the position-limiting region of the second fill light matching the current position can be adaptively determined according to the current position of the first fill light.

It can be understood that at different time points, the position of the first fill light within the first position-limiting region varies, which results in different position-limiting regions for the second fill light where an overlapping illumination region exists between the illumination region of the first fill light and the illumination region of the second fill light. Therefore, in the embodiments of the present application, the current position of the first fill light within the first position-limiting region is determined, that is, the specific position at which the first fill light is currently located within the first position-limiting region is determined. The second position-limiting region of the second fill light is then determined according to the current position of the first fill light within the first position-limiting region. All position regions where the second fill light rotates to are determined. For multiple position points within all position regions where the second fill light rotates to, in a case where the second fill light is located at the current position point and the first fill light is at the current position within the first position-limiting region, it is determined whether an overlapping illumination region exists. If no overlapping illumination region exists, the current position point is regarded as a non-position-limiting region of the second fill light. If an overlapping illumination region exists, it is determined whether the overlapping illumination region causes local overexposure in the monitoring image of the camera device. If the overlapping illumination region causes local overexposure in the monitoring image of the camera device, the position point is regarded as a position-limiting region; if the overlapping illumination region does not cause local overexposure in the monitoring image of the camera device, the position point is regarded as a non-position-limiting region. The reason for this arrangement is that the illumination brightness at the center of a fill light is slightly higher than that at the periphery. Therefore, when the overlapping illumination region between the first fill light and the second fill light is sufficiently small, it does not cause overexposure in the monitoring image of the camera device. Whether the overlapping illumination region causes local overexposure in the monitoring image of the camera device may be determined by checking whether the area of the overlapping illumination region is smaller than a preset area threshold. For example, in a case where the area of the overlapping illumination region is smaller than the preset area threshold, it can be determined that the overlapping illumination region does not cause local overexposure in the monitoring image of the camera device. Exemplarily, FIG. 6 is a diagram showing an overlap of illumination regions in a binocular camera device according to an embodiment of the present application. As shown in FIG. 6, although the illumination region of the fill light in hemisphere A overlaps with the illumination region of the fill light in hemisphere B, that is, the overlapping illumination region S3 in FIG. 6, since this overlapping illumination region is relatively small, the binocular camera device does not experience overexposure when monitoring the overlapping illumination region S3, and the monitoring image remains clear.

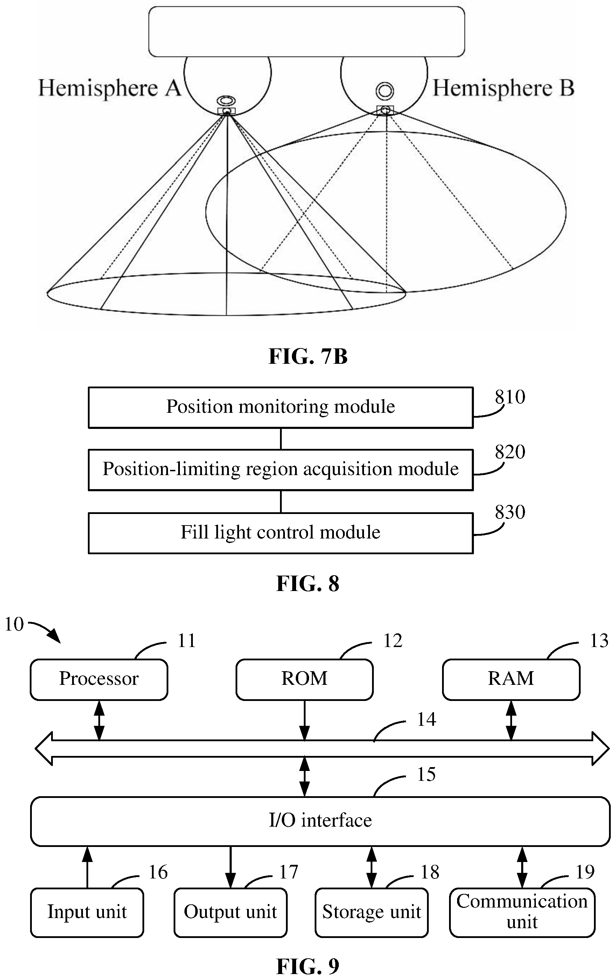

Optionally, the current position includes a pitch angle and a horizontal rotation angle. In a case where the camera device is a spherical camera device (binocular spherical camera device or multi-lens spherical camera device) or a hemispherical camera device (binocular hemispherical camera device or multi-lens hemispherical camera device), the camera device is at least capable of dual-axis rotation. Dual-axis rotation of the camera device is used as an example. The position-limiting regions of multiple fill lights in the camera device are related not only to the horizontal rotation angle of the fill lights but also to the vertical pitch angle of the fill lights. For the same horizontal rotation angle, different vertical pitch angles result in different overlapping illumination regions. The more parallel the vertical pitch angles of two fill lights are, the larger the overlapping illumination region becomes, and therefore the larger the position-limiting region of the fill lights. Conversely, the greater the difference between the vertical pitch angles of two fill lights, the smaller the overlapping illumination region becomes, and therefore the smaller the position-limiting region of the fill lights. FIG. 7A is a diagram showing an overlap of illumination regions in a binocular camera device according to an embodiment of the present application. FIG. 7B is a diagram showing an overlap of illumination regions in another binocular camera device according to an embodiment of the present application. As shown in FIG. 7A and FIG. 7B, the illumination region of each fill light may be regarded as a cone shape, with the apexes of the cones at the same distance. In a case where the pitch angle of the fill light in hemisphere A is fixed, the overlapping illumination region is maximized when the pitch angle of the fill light in hemisphere B is the same as that of the fill light in hemisphere A. As the pitch angle of the fill light in hemisphere B increases, the overlapping illumination region gradually decreases. After the pitch angle of the fill light in hemisphere B reaches a certain value, the two illumination regions no longer intersect. Therefore, the horizontal rotation angle and pitch angle of the first fill light within the first position-limiting region are determined, and the second position-limiting region of the second fill light is determined according to the horizontal rotation angle and pitch angle of the first fill light. It can be understood that under the premise that the horizontal rotation angle of the fill lights is fixed, the position-limiting region of the fill lights is influenced by the pitch angle of the fill lights. In other words, when the horizontal rotation angle remains unchanged, the position-limiting region of the fill lights varies with changes in the pitch angle of the fill lights. Exemplarily, in a case where the first fill light rotates horizontally to the preset first position-limiting region, a limitation process is triggered for the second fill light. If the first fill light continues to rotate vertically thereafter, the position-limiting region of the second fill light changes with variations in the pitch angle of the first fill light. Therefore, the second position-limiting region of the second fill light is determined according to the horizontal rotation angle and the pitch angle of the first fill light.

In S330, in a case where it is determined, according to the position information, that the second fill light rotates to a boundary position of the second position-limiting region, the second fill light is controlled to remain stationary at the boundary position of the second position-limiting region, and the second camera head is controlled to continue rotating toward the second position-limiting region or remain stationary.

In the embodiments of the present application, in a case where it is determined according to the real-time monitored position information of the second fill light that the second fill light rotates to the boundary position of the second position-limiting region, it indicates that if the second fill light continues to rotate toward the second position-limiting region, an overlap between the illumination region of the first fill light and the illumination region of the second fill light occurs, and overexposure appears when the camera device monitors the overlapping illumination region. Therefore, when it is determined that the second fill light rotates to the boundary position of the second position-limiting region, the second fill light is controlled to remain stationary at the boundary position of the second position-limiting region, while the second camera head may continue to rotate toward the second position-limiting region according to service requirements or remain stationary at the boundary position together with the second fill light. It should be noted that during a process in which the second fill light remains stationary at the boundary position of the second position-limiting region while the second camera head continues to rotate toward the second position-limiting region, the second camera head may utilize the first fill light to provide illumination to a corresponding monitoring region. Therefore, the second camera can also effectively ensure monitoring of the corresponding monitoring area.

Exemplarily, as shown in FIG. 5, the camera head and the fill light in hemisphere A rotate synchronously first, followed by the camera head and the fill light in hemisphere B. In a case where the camera head and the fill light in hemisphere A synchronously rotate clockwise to position C within the first position-limiting region (the position region corresponding to minor arc CD), the position information of the camera head and the fill light in hemisphere B is monitored in real time. When it is determined that the camera head and the fill light in hemisphere B synchronously rotate to the boundary position C' within the second position-limiting region (the position region corresponding to minor arc C'D'), the fill light in hemisphere B is controlled to remain stationary at position C', while the camera head in hemisphere B may continue to rotate within the position region corresponding to minor arc C'D'. For another example, in a case where the camera head and the fill light in hemisphere A synchronously rotate counterclockwise to position D, the position information of the camera head and the fill light in hemisphere B is monitored in real time. When it is determined that the camera head and the fill light in hemisphere B synchronously rotate to position D', the fill light in hemisphere B is controlled to remain stationary at position D', while the camera head in hemisphere B may continue to rotate within the position region corresponding to minor arc C'D'. The same principle applies when the camera head and the fill light in hemisphere B rotate first and the camera head and the fill light in hemisphere A rotate afterward, and the description is not repeated here.

The fill light control method provided in the embodiments of the present application is applied to a camera device. The camera device includes at least two camera heads and at least two fill lights, and the camera heads and the fill lights are in a one-to-one correspondence. The method includes the following: In a case where a first camera head and a corresponding first fill light synchronously rotate to a preset first position-limiting region, position information of the second fill light is monitored in real time during a process in which a second camera head and a corresponding second fill light rotate synchronously, where the first camera head is a camera head that rotates first among the at least two camera heads, and the second camera head is any camera head among the at least two camera heads other than the first camera head. A second position-limiting region of the second fill light is acquired, where in a case where the first fill light is at any position outside the first position-limiting region, an overlapping illumination region between the first fill light and the second fill light is not overexposed, and in a case where the second fill light is at any position outside the second position-limiting region, an overlapping illumination region between the second fill light and the first fill light is not overexposed. In a case where it is determined, according to the position information, that the second fill light rotates to a boundary position of the second position-limiting region, the second fill light is controlled to remain stationary at the boundary position of the second position-limiting region, and the second camera head is controlled to continue rotating toward the second position-limiting region or remain stationary. Through the technical solution provided in the embodiments of the present application, the technical problem of local overexposure caused by an overlap of illumination regions in a binocular camera device or multi-lens camera device is effectively solved without affecting other application scenarios.

In some embodiments, the second position-limiting region includes a third position-limiting region of the second camera head. Controlling the second camera head to continue rotating toward the second position-limiting region includes controlling the second camera head to continue rotating toward the second position-limiting region, and in a case where it is determined that the second camera head rotates to a boundary position of the third position-limiting region, controlling the second camera head to continue rotating in a direction away from the third position-limiting region or remain stationary at the boundary position of the third position-limiting region. Optionally, during a process in which the second camera head continues rotating in the direction away from the third position-limiting region, the method also includes, before the second camera head rotates to the boundary position of the second position-limiting region, controlling the second fill light to remain stationary at the boundary position of the second position-limiting region, until when the second camera head rotates to the boundary position of the second position-limiting region, controlling the second camera head and the second fill light to rotate synchronously.

As shown in FIG. 5, in a case where the camera head in hemisphere A rotates to the position region corresponding to minor arc EF, the field of view of the camera head in hemisphere A is substantially blocked by hemisphere B. Therefore, monitoring the position region corresponding to minor arc EF by the camera head in hemisphere A has little practical significance. To avoid ineffective rotation of the camera head, the position region corresponding to minor arc EF may be set as the position-limiting region of the camera head in hemisphere A. Similarly, the position region corresponding to minor arc E'F' may be set as the position-limiting region of the camera head in hemisphere B. In extreme cases, E and F may coincide at a point, that is, position E/F, and likewise, E' and F' may coincide at a point, that is, position E'/F'. It should be noted that the position-limiting regions of the at least two camera heads in the camera device may be determined according to the distance between the at least two camera heads and the fields of view of the at least two camera heads. Since the illumination angle of a fill light is larger than the field of view of the corresponding camera head, the position-limiting region of the camera head is smaller than the position-limiting region of the corresponding fill light, and the position-limiting region of the fill light includes the position-limiting region of the camera head.

In the embodiments of the present application, the second position-limiting region of the second fill light includes a third position-limiting region of the second camera head. In a case where the second fill light rotates to the boundary position of the second position-limiting region, the second fill light is controlled to remain stationary at that boundary position, while the second camera head may continue to rotate toward the second position-limiting region. In a case where the second camera head rotates to the boundary position of the third position-limiting region, the second camera head is controlled to continue rotating in a direction away from the third position-limiting region or remain stationary at the boundary position of the third position-limiting region. It can be understood that the boundary position of the third position-limiting region is the extreme position the second camera head rotates to. That is, when the second camera head rotates to the boundary position of the third position-limiting region, the second camera head cannot continue rotating further into the third position-limiting region and can only continue rotating in a direction away from the third position-limiting region or remain stationary at the boundary position of the third position-limiting region. Exemplarily, in a case where the camera head and the fill light in hemisphere A synchronously rotate clockwise to position C, and the camera head and the fill light in hemisphere B synchronously rotate counterclockwise to position C', the fill light in hemisphere B remains stationary at position C', while the camera head in hemisphere B may continue to rotate counterclockwise within the position region corresponding to minor arc C'D' to reach position E'. After reaching position E', the camera head in hemisphere B begins to rotate clockwise from E' toward C' or remains stationary at E'. When the camera head in hemisphere B rotates to position C', the fill light and the camera head in hemisphere B continue to synchronously rotate within the position region corresponding to major arc C'D'.

For another example, in a case where the camera head and the fill light in hemisphere A synchronously rotate counterclockwise to position D, and the camera head and the fill light in hemisphere B synchronously rotate clockwise to position D', the fill light in hemisphere B is controlled to remain stationary at position D', while the camera head in hemisphere B may continue to rotate clockwise within the position region corresponding to minor arc C'D' to reach position F'. After reaching position F', the camera head in hemisphere B begins to rotate counterclockwise from F' toward D' or remains stationary at F'. When the camera head in hemisphere B rotates to position D', the fill light and the camera head in hemisphere B continue to synchronously rotate within the position region corresponding to major arc C'D'.

### Embodiment two

FIG. 8 is a diagram illustrating the structure of a fill light control apparatus according to embodiment two of the present application. As shown in FIG. 8, the apparatus is applied to a camera device, where the camera device includes at least two camera heads and at least two fill lights, and the camera heads and the fill lights are in a one-to-one correspondence. The apparatus includes a position monitoring module 810, a position-limiting region acquisition module 820, and a fill light control module 830. The position monitoring module 810 is configured to, in a case where a first camera head and a corresponding first fill light synchronously rotate to a preset first position-limiting region, monitor position information of the second fill light in real time during a process in which a second camera head and a corresponding second fill light rotate synchronously, where the first camera head is a camera head that rotates first among the at least two camera heads, and the second camera head is any camera head among the at least two camera heads other than the first camera head. The position-limiting region acquisition module 820 is configured to acquire a second position-limiting region of the second fill light, where in a case where the first fill light is at any position outside the first position-limiting region, an overlapping illumination region between the first fill light and the second fill light is not overexposed, and in a case where the second fill light is at any position outside the second position-limiting region, an overlapping illumination region between the second fill light and the first fill light is not overexposed. The fill light control module 830 is configured to, in a case where it is determined, according to the position information of the second fill light, that the second fill light rotates to a boundary position of the second position-limiting region, control the second fill light to remain stationary at the boundary position of the second position-limiting region, and control the second camera head to continue rotating toward the second position-limiting region or remain stationary.

Optionally, the position-limiting region acquisition module is configured to determine a current position of the first fill light within the first position-limiting region, and determine the second position-limiting region of the second fill light according to the current position.

Optionally, the current position includes a pitch angle and a horizontal rotation angle.

Optionally, the position-limiting region acquisition module includes a correspondence table acquisition unit and a position-limiting region determination unit. The correspondence table acquisition unit is configured to acquire a correspondence table between the at least two fill lights of the camera device and position-limiting regions. The position-limiting region determination unit is configured to determine the second position-limiting region of the second fill light according to the correspondence table.

Optionally, the correspondence table acquisition unit is configured to acquire configuration information of the camera device, where the configuration information includes the distance between the at least two camera heads, fields of view of the at least two camera heads, and illumination angles of the at least two fill lights; determine position-limiting regions for the at least two fill lights according to the configuration information, respectively; and generate the correspondence table between the at least two fill lights of the camera device and the position-limiting regions according to the position-limiting regions of the at least two fill lights.

Optionally, the second position-limiting region includes a third position-limiting region of the second camera head. The fill light control module is configured to control the second camera head to continue rotating toward the second position-limiting region, and in a case where it is determined that the second camera head rotates to a boundary position of the third position-limiting region, control the second camera head to continue rotating in a direction away from the third position-limiting region or remain stationary at the boundary position of the third position-limiting region.

Optionally, the apparatus also includes a synchronous control module. The synchronous control module is configured to, during a process in which the second camera head continues rotating in the direction away from the third position-limiting region and, before the second camera head rotates to the boundary position of the second position-limiting region, control the second fill light to remain stationary at the boundary position of the second position-limiting region, until when the second camera head rotates to the boundary position of the second position-limiting region, control the second camera head and the second fill light to rotate synchronously.

The fill light control apparatus provided in the embodiments of the present application can execute the fill light control method provided in any embodiment of the present application, and includes corresponding functional modules for executing the method.

### Embodiment three

FIG. 9 is a diagram illustrating the structure of a camera device 10 that can be used to implement the embodiments of the present application. The camera device is intended to represent various forms of digital computers, for example, a laptop computer, a desktop computer, a worktable, a personal digital assistant, a server, a blade server, a mainframe computer, or other applicable computers. The camera device may also represent various forms of mobile apparatuses such as a personal digital processing apparatus, a cellular phone, a smart phone, a wearable device (for example, a helmet, glasses, and a watch), and other similar computing apparatuses. The components shown herein, their connections and relationships, and their functions, are by way of examples only and are not intended to limit implementations of the present application described and/or claimed herein.

As shown in FIG. 9, the camera device 10 includes at least two camera heads and at least two fill lights (not shown in the figure), where the camera heads and the fill lights are in a one-to-one correspondence. The camera device 10 also includes at least one processor 11, and a memory communicatively connected to the at least one processor, such as a read-only memory (ROM) 12 and a random-access memory (RAM) 13. The memory stores a computer program executable by the at least one processor. The processor 11 may perform various appropriate actions and processes based on computer programs stored in a ROM 12 or loaded from a storage unit 18 into a RAM 13. The RAM 13 may also store multiple programs and data required for the operation of the camera device 10. The processor 11, the ROM 12, and the RAM 13 are connected to each other through a bus 14. An input/output (I/O) interface 15 is also connected to the bus 14.

Multiple components in the camera device 10 are connected to the I/O interface 15, including an input unit 16, such as a keyboard or a mouse; an output unit 17, such as multiple types of displays or speakers; a storage unit 18, such as a magnetic disk or an optical disk; and a communication unit 19, such as a network card, a modem, or a wireless communication transceiver. The communication unit 19 allows the camera device 10 to exchange information/data with other devices through a computer network such as the Internet and/or multiple telecommunication networks.

The processor 11 may be multiple general-purpose and/or special-purpose processing components having processing and computing capabilities. Some examples of the processor 11 include but are not limited to, a central processing unit (CPU), a graphics processing unit (GPU), multiple dedicated artificial intelligence (AI) computing chips, multiple processors running machine learning model algorithms, a digital signal processor (DSP), and any suitable processors, controllers, and microcontrollers. The processor 11 executes the various methods and processes described above, such as the fill light control method.

In some embodiments, the fill light control method may be implemented as a computer program tangibly embodied in a computer-readable storage medium, such as the storage unit 18. In some embodiments, part or all of the computer program may be loaded and/or installed on the camera device 10 via the ROM 12 and/or the communication unit 19. When the computer program is loaded into the RAM 13 and executed by the processor 11, one or more steps of the fill light control method described above may be performed. Optionally, in other embodiments, the processor 11 may be configured to perform the fill light control method by any other suitable means (for example, by means of firmware).

Multiple implementations of the systems and techniques described above in the present application may be implemented in a digital electronic circuit system, an integrated circuit system, a field programmable gate array (FPGA), an application specific integrated circuit (ASIC), an application specific standard product (ASSP), a system on chip system (SOC), a complex programmable logic device (CPLD), computer hardware, firmware, software, and/or combinations thereof. These multiple implementations may include an implementation in one or more computer programs that may be executable and/or interpretable on a programmable system including at least one programmable processor. The programmable processor may be special-purpose or general-purpose for receiving data and instructions from a memory system, at least one input apparatus, and at least one output apparatus and transmitting the data and instructions to the memory system, the at least one input apparatus, and the at least one output apparatus.

The computer program for implementing the method of the present application may be written in any combination of one or more programming languages. These computer programs may be provided to a processor of a general-purpose computer, a special-purpose computer, or other programmable data processing apparatus such that the computer programs, when executed by the processor, cause the functions/operations specified in flowcharts and/or block diagrams to be implemented. The computer program may be executed entirely or partly on the machine, as a stand-alone software package partly on the machine and partly on a remote machine, or entirely on the remote machine or server.

In the context of the present application, a computer-readable storage medium may be a tangible medium that may contain or store a computer program for use by or in conjunction with an instruction execution system, apparatus, or device. The computer-readable storage medium may include, but is not limited to, electronic, magnetic, optical, electromagnetic, infrared, or semiconductor systems, apparatuses, or devices, or any suitable combination thereof. Optionally, the computer-readable storage medium may be a machine-readable signal medium. Examples of machine-readable storage medium may include an electrical connection having one or more wires, a portable computer magnetic disk, a hard disk, a RAM, a ROM, an erasable programmable read-only memory (EPROM) or a flash memory, an optical fiber, a portable compact disc read-only memory (CD-ROM), an optical storage device, a magnetic storage device, or any suitable combination thereof.

To provide interaction with a user, the systems and techniques described herein may be implemented on a camera device having a display device (for example, a cathode ray tube (CRT) or a liquid crystal display (LCD) monitor) for displaying information to the user and a keyboard and a pointing device (for example, a mouse or a trackball) through which the user can provide input to the camera device. Other types of apparatuses may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware, or front-end components. Components of a system may be interconnected by any form or medium of digital data communication (for example, a communication network). Examples of the communication network include a local area network (LAN), a wide area network (WAN), a blockchain network, and the Internet.

The computing system may include a client and a server. The client and the server are generally remote from each other and typically interact through a communication network. The relationship between the client and the server arises by virtue of computer programs running on respective computers and having a client-server relationship to each other. The server, which may be a cloud server and is also referred to as a cloud computing server or a cloud host, is a host product in a cloud computing service system. The server solves the problems of difficult management and weak service scalability in the service of a related physical host and a related virtual private server (VPS).

It is to be understood that multiple forms of processes shown above may be adopted with steps reordered, added, or deleted. For example, the steps described in the present application may be performed in parallel, sequentially, or in different orders, as long as the desired results of the technical solutions of the present application can be achieved, and no limitation is imposed herein.

## Claims

1. A fill light control method, the method being applied to a camera device and comprising:
in a case where a first camera head of the camera device and a corresponding first fill light of the camera device synchronously rotate to a preset first position-limiting region, monitoring position information of the second fill light in real time during a process in which a second camera head of the camera device and a corresponding second fill light of the camera device rotate synchronously, wherein the camera device comprises at least two camera heads and at least two fill lights, the first camera head is a camera head that rotates first among the at least two camera heads, the second camera head is any camera head among the at least two camera heads other than the first camera head, and the at least two camera heads and the at least two fill lights are in a one-to-one correspondence;
acquiring a second position-limiting region of the second fill light, wherein in a case where the first fill light is at any position outside the first position-limiting region, an overlapping illumination region between the first fill light and the second fill light is not overexposed, and in a case where the second fill light is at any position outside the second position-limiting region, an overlapping illumination region between the second fill light and the first fill light is not overexposed; and
in a case where it is determined, according to the position information of the second fill light, that the second fill light rotates to a boundary position of the second position-limiting region, controlling the second fill light to remain stationary at the boundary position of the second position-limiting region, and controlling the second camera head to continue rotating toward the second position-limiting region or remain stationary.

2. The fill light control method according to claim 1, wherein acquiring the second position-limiting region of the second fill light comprises:
determining a current position of the first fill light within the first position-limiting region; and
determining the second position-limiting region of the second fill light according to the current position.

3. The fill light control method according to claim 2, wherein the current position comprises a pitch angle and a horizontal rotation angle.

4. The fill light control method according to claim 1, wherein acquiring the second position-limiting region of the second fill light comprises:
acquiring a correspondence table between the at least two fill lights of the camera device and position-limiting regions; and
determining the second position-limiting region of the second fill light according to the correspondence table.

5. The fill light control method according to claim 4, wherein acquiring the correspondence table between the at least two fill lights of the camera device and the position-limiting regions comprises:
acquiring configuration information of the camera device, wherein the configuration information comprises a distance between the at least two camera heads, fields of view of the at least two camera heads, and illumination angles of the at least two fill lights;
determining position-limiting regions for the at least two fill lights according to the configuration information, respectively; and
generating the correspondence table between the at least two fill lights of the camera device and the position-limiting regions according to the position-limiting regions of the at least two fill lights.

6. The fill light control method according to claim 1, wherein the second position-limiting region comprises a third position-limiting region of the second camera head; and
controlling the second camera head to continue rotating toward the second position-limiting region comprises:
controlling the second camera head to continue rotating toward the second position-limiting region, and in a case where it is determined that the second camera head rotates to a boundary position of the third position-limiting region, controlling the second camera head to continue rotating in a direction away from the third position-limiting region or remain stationary at the boundary position of the third position-limiting region.

7. The fill light control method according to claim 6, wherein during a process in which the second camera head continues rotating in the direction away from the third position-limiting region, the method further comprises:
before the second camera head rotates to the boundary position of the second position-limiting region, controlling the second fill light to remain stationary at the boundary position of the second position-limiting region, until when the second camera head rotates to the boundary position of the second position-limiting region, controlling the second camera head and the second fill light to rotate synchronously.

8. A fill light control apparatus, applied to a camera device, wherein the camera device comprises at least two camera heads and at least two fill lights, the at least two camera heads and the at least two fill lights are in a one-to-one correspondence, and the apparatus comprises:
a position monitoring module configured to, in a case where a first camera head and a corresponding first fill light synchronously rotate to a preset first position-limiting region, monitor position information of the second fill light in real time during a process in which a second camera head and a corresponding second fill light rotate synchronously, wherein the first camera head is a camera head that rotates first among the at least two camera heads, and the second camera head is any camera head among the at least two camera heads other than the first camera head;
a position-limiting region acquisition module configured to acquire a second position-limiting region of the second fill light, wherein in a case where the first fill light is at any position outside the first position-limiting region, an overlapping illumination region between the first fill light and the second fill light is not overexposed, and in a case where the second fill light is at any position outside the second position-limiting region, an overlapping illumination region between the second fill light and the first fill light is not overexposed; and
a fill light control module configured to, in a case where it is determined, according to the position information of the second fill light, that the second fill light rotates to a boundary position of the second position-limiting region, control the second fill light to remain stationary at the boundary position of the second position-limiting region, and control the second camera head to continue rotating toward the second position-limiting region or remain stationary.

9. A camera device, comprising at least two camera heads and at least two fill lights, wherein the at least two camera heads and the at least two fill lights are in a one-to-one correspondence;
at least one processor; and
a memory communicatively connected to the at least one processor; wherein
the memory stores a computer program executable by the at least one processor, and the computer program is configured to, when executed by the at least one processor, cause the at least one processor to perform the fill light control method according to any one of claims 1 to 7.

10. A computer-readable storage medium storing computer instructions that, when executed by a processor, cause the processor to perform the fill light control method according to any one of claims 1 to 7.
